# EUROPEAN PATENT SPECIFICATION

(11) **EP 3 441 903 B1**
(45) Date of publication and mention of the grant of the patent: **09.06.2021**
(21) Application number: 15906245.4
(22) Date of filing: 14.10.2015
(51) Int. Cl.: G06F 21/62, H04L 29/06, H04L 29/08

(54) **ACCESS MANAGEMENT SYSTEM AND PROGRAM**
ZUGRIFFSVERWALTUNGSSYSTEM UND PROGRAMM
SYSTÈME DE GESTION D'ACCÈS ET PROGRAMME

(43) Date of publication of application: 13.02.2019
(73) Proprietor: Digital Arts Inc., Tokyo 100-0004 (JP)
(72) Inventor: DOGU, Toshio, Tokyo 100-0004 (JP); TAKAHASHI, Noriyuki, Tokyo 100-0004 (JP); MATSUMOTO, Takuya, Tokyo 100-0004 (JP)
(74) Representative: Hoffmann Eitle
(86) International application number: PCT/JP2015/079100
(87) International publication number: WO 2017/064781

(56) References cited:
- WO-A1-2014/180416
- WO-A1-2015/087923
- JP-A- 2014 017 826
- JP-A- 2015 114 837
- US-A1- 2014 101 773
- 'Security Seminar REVIEW -Joho System ni Ima Motomerareru Security Taisaku towa' NIKKEI COMMUNICATIONS vol. 589, 01 February 2013, pages 30 - 33, XP009507620

## Description

### [Technical Field]

The present invention relates to an access management system, a file access system, an encrypting apparatus and a program.

### [Background Art]

A method to transmit an electronic file safely and simply has been known, and the method uses a management server that manages a decryption password required for decryption of an encrypted electronic file (please see Patent Document 1, for example).

Patent Document 2 relates to an access control apparatus, a program, and an access control system.

Patent Document 3 relates to an electronic file transmission system.
Patent Document 1: Japanese Patent Application Publication No. 2010-154419
Patent Document 2: WO 2015/087923
Patent Document 3: US 2014/101773

### [SUMMARY]

### [Technical Problem]

Conventionally, there was a problem that an access right corresponding to access right setting at a file sharing server cannot be set for an electronic file outside the file sharing server.

### [Means for Solving Problem]

The invention is defined by the independent claims, while preferred embodiments are defined in the dependent claims. Further aspects are provided for facilitating the understanding of the invention.

In a first aspect, an access management system that manages access to an electronic file stored in a file sharing server includes: a file access information receiving unit that receives, from a user device, file identification information identifying the electronic file to be accessed by the user device; a restriction information receiving unit that receives restriction information indicating a restriction imposed by the file sharing server on access, by the user device, to the electronic file that is identified by the file identification information received by the file access information receiving unit and is stored in the file sharing server; and an access control information transmitting unit that transmits, to the user device, access control information that is for controlling access to the electronic file in the user device and corresponds to the restriction information.

In a second aspect, an encrypting apparatus includes: an encrypting unit that encrypts an electronic file by including file identification information identifying the electronic file to be encrypted; a file storage control unit that causes a file sharing server to store therein the encrypted electronic file; and a storage control unit that causes an external server to store therein, in association with each other: restriction specifying information for specifying a restriction imposed by the file sharing server on access to the encrypted electronic file stored in the file sharing server; the file identification information; and a file decryption key required for decryption of the encrypted electronic file.

The summary clause does not necessarily describe all necessary features of the embodiments of the present invention.

### [BRIEF DESCRIPTION OF DRAWINGS]

FIG. 1 illustrates one example of a file access system 100 together with a communication network 70.
FIG. 2 schematically illustrates the block configuration of a user device 10.
FIG. 3 schematically illustrates the block configuration of a user device 20.
FIG. 4 schematically illustrates the block configuration of a management server 110.
FIG. 5 schematically illustrates the block configuration of a cooperating server 120.
FIG. 6 illustrates a processing sequence in a case where an electronic file 30 is encrypted in the user device 10.
FIG. 7 illustrates a processing sequence in a case where an encrypted file 40 is accessed in the user device 20.
FIG. 8 illustrates a processing sequence in a case where the electronic file 30 is shared in a file sharing server 130.
FIG. 9 illustrates a processing sequence according to another method in which the electronic file 30 is shared in the file sharing server 130.
FIG. 10 illustrates a processing sequence in a case where the user device 20 accesses the encrypted file 40 downloaded from the file sharing server 130.
FIG. 11 illustrates a processing sequence in a case where the encrypted file 40 shared in the file sharing server 130 is displayed through browsing software such as a WEB browser.
FIG. 12 illustrates a processing sequence in a case where the encrypted file 40 on the file sharing server 130 is converted back to the electronic file 30 before encryption.
FIG. 13 illustrates another example of an encryption process in the user device 10.
FIG. 14 illustrates a process flow showing operation in a case where the user device 20 accesses the encrypted file 40.

### [DESCRIPTION OF EXEMPLARY EMBODIMENTS]

Hereinafter, (some) embodiment(s) of the present invention will be described. The embodiment(s) do(es) not limit the invention according to the claims, and all the combinations of the features described in the embodiment(s) are not necessarily essential to means provided by aspects of the invention.

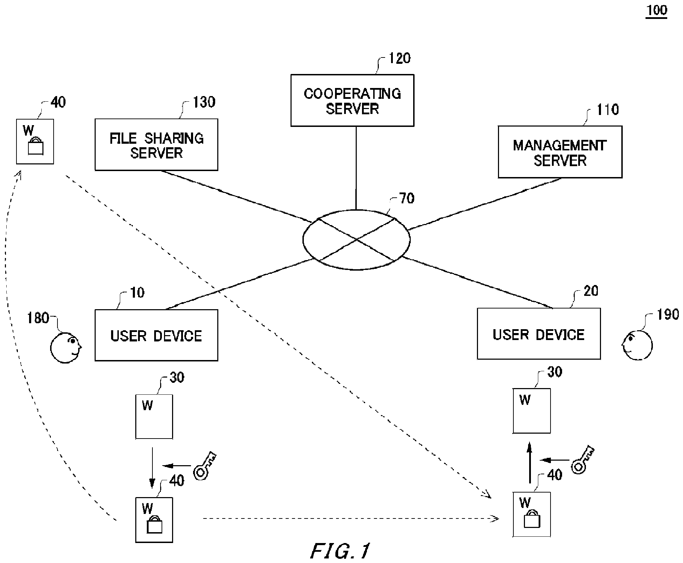

FIG. 1 illustrates one example of a file access system 100 together with a communication network 70. The file access system 100 provides an IRM (Information Rights Management) function for data such as an electronic file. The file access system 100 comprises a user device 10, a user device 20, a management server 110, a cooperating server 120 and a file sharing server 130. The communication network 70 includes the Internet, for example. The communication network 70 may include a fixed network and a mobile communication network.

The management server 110, the cooperating server 120 and the file sharing server 130 are provided outside the user device 10. Also, the management server 110, the cooperating server 120 and the file sharing server 130 are provided outside the user device 20. The user device 10 and the user device 20 transmit and receive information to and from the management server 110 and the file sharing server 130 via the communication network 70. The cooperating server 120 transmits and receives information to and from the management server 110 and the file sharing server 130 via the communication network 70. The user device 10 may be a personal computer, a mobile phone terminal, a mobile information terminal etc., for example. The user device 20 may be a personal computer, a mobile phone terminal, a mobile information terminal etc., for example. IRM software is installed on the user device 10 and the user device 20. The management server 110 is realized by a computer. The cooperating server 120 is realized by a computer. The file sharing server 130 is realized by a computer.

In the present embodiment, the user device 10 generates an electronic file. The user device 20 accesses the electronic file generated by the user device 10.

A user 180 is a creator who creates an electronic file 30. The user 180 creates an electronic file by using the user device 10. A user 190 is an accessing person who accesses data of the electronic file 30 created by the user 180. For example, the user 190 views the data of the electronic file 30 by using the user device 20.

The user device 10 creates the electronic file 30 based on an instruction from the user 180, etc. The user device 10 encrypts the electronic file 30 to generate an encrypted file 40 which is an encrypted electronic file. Based on an instruction from the user 180, etc., the user device 10 selects an access right and an access-permitted user who can access data of the electronic file 30. Examples of the access right include those permitting only viewing, permitting only viewing and editing, etc. Management information indicating a user ID and the access right of the access-permitted user is transmitted from the user device 10 to the management server 110 to be managed by the management server 110 together with a decryption key of the encrypted file 40. The user ID may be a mail address. Various types of information other than a mail address may be applied as the user ID.

The encrypted file 40 is passed over to the user device 20 and to the user 190 via an e-mail, a storage medium, etc., and is accessed through the user device 20. When accessing the encrypted file 40, the user device 20 transmits information indicating the user 190 to the management server 110. When having determined that the user 190 is included in access-permitted users based on management information, the management server 110 transmits a file decryption key and access right information to the user device 20. The user device 20 performs decryption by using the file decryption key received from the management server 110 to acquire the data of the electronic file 30. The user device 20 is allowed to access the data of the electronic file 30 according to the access right information.

Next, file sharing by using the file sharing server 130 is schematically explained. The user 180 has an account in the file sharing server 130, and has a dedicated file storage space in the file sharing server 130. The file sharing server 130 can be set such that an access right of a user other than the user 180 can be set for an electronic file in a folder for the user 180. For example, the file sharing server 130 can set an access right of a user other than the user 180 for an electronic file in a specific folder. For example, the user 190 may be permitted only to view the electronic file or may be permitted only to view and edit the electronic file. When a file is to be shared by using the file sharing server 130, the user device 10 uploads the encrypted file 40 to a predetermined folder in the file sharing server 130. Then, the user device 10 acquires, from the file sharing server 130, a shared file ID of the encrypted file uploaded to the file sharing server 130. The shared file ID is one example of information identifying a file stored in the file sharing server 130. The user device 10 transmits the shared file ID to the management server 110.

The user device 20 directly downloads the encrypted file 40 from the file sharing server 130 to acquire the encrypted file 40. When opening of the encrypted file 40 is attempted in the user device 20, a user ID of the user 190 is transmitted to the management server 110, and the management server 110 is requested to provide a file decryption key for decrypting the encrypted file 40. The management server 110 transmits the shared file ID of the encrypted file 40 to the cooperating server 120. By using the shared file ID, the cooperating server 120 acquires access right information of a shared folder in which the encrypted file 40 is stored. Based on the access right information, the cooperating server 120 generates access right information in the user device 20, and transmits the access right information to the management server 110. The management server 110 transmits the file decryption key and the access right information to the user device 20. Thereby, the user device 20 is allowed to access the data of the electronic file 30 according to the access right set for the shared folder in the file sharing server 130.

Also, as another method of file sharing by using the file sharing server 130, a method of storing an unencrypted electronic file 30 in a shared folder in the file sharing server 130 is schematically explained. The user device 10 uploads the electronic file 30 to the file sharing server 130 to store the electronic file 30 in the shared folder. The cooperating server 120 is monitoring the shared folder, and when the electronic file 30 is newly stored, the cooperating server 120 encrypts the electronic file 30, and uploads the obtained encrypted file to the shared folder in the file sharing server 130. Next, the cooperating server 120 acquires, from the file sharing server 130, a shared file ID of the encrypted file uploaded to the file sharing server 130 and transmits the shared file ID to the management server 110, as in the case of encrypting the electronic file 30 in the user device 10. Thereby, when the user device 20 downloads the encrypted file 40 from the file sharing server 130, and opens it, it is allowed to access the data of the electronic file 30 according to an access right set for the shared folder in the file sharing server 130.

It should be noted that as an example of sharing the encrypted file 40 in the file sharing server 130, the case where the user device 20 downloads the encrypted file 40 from the file sharing server 130 was explained. However, once the encrypted file 40 is stored in the file sharing server 130, the user device 20 is allowed to access the data of the electronic file 30 according to an access right of the shared folder regardless of through which path the user device 20 has obtained the encrypted file 40 after the storage.

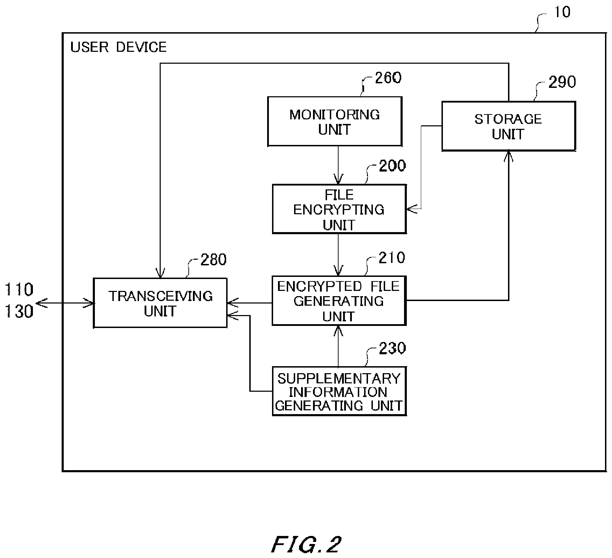

FIG. 2 schematically illustrates the block configuration of the user device 10. The user device 10 has a file encrypting unit 200, an encrypted file generating unit 210, a supplementary information generating unit 230, a monitoring unit 260, a storage unit 290 and a transceiving unit 280.

The transceiving unit 280 performs communication via the communication network 70. The transceiving unit 280 communicates with the management server 110, the file sharing server 130, etc. The transceiving unit 280 is realized by a communication apparatus such as a network interface. The storage unit 290 stores therein data of an electronic file, etc. The storage unit 290 is realized by a recording apparatus such as a hard disk.

The file encrypting unit 200 encrypts an electronic file stored in the storage unit 290. The supplementary information generating unit 230 generates supplementary information that is supplementary to the encrypted electronic file. For example, the supplementary information includes a file ID identifying an electronic file encrypted by the file encrypting unit 200. The supplementary information generating unit 230 may encrypt the supplementary information.

The encrypted file generating unit 210 generates an encrypted file based on an electronic file encrypted by the file encrypting unit 200. The encrypted file may be an electronic file encrypted by the file encrypting unit 200. The encrypted file may be an electronic file which is encrypted by the file encrypting unit 200 and which is supplemented with the supplementary information generated by the supplementary information generating unit 230 or in which the supplementary information is embedded. The transceiving unit 280 transmits, to the outside via the communication network 70, the encrypted file generated by the encrypted file generating unit 210. The destination of the transmission of the encrypted file may be the file sharing server 130, the user device 20, a mail server, etc. The monitoring unit 260 monitors a predetermined folder in a file system constructed by using the storage unit 290. When a new electronic file is stored in the predetermined folder, the monitoring unit 260 causes the file encrypting unit 200 to encrypt the new electronic file.

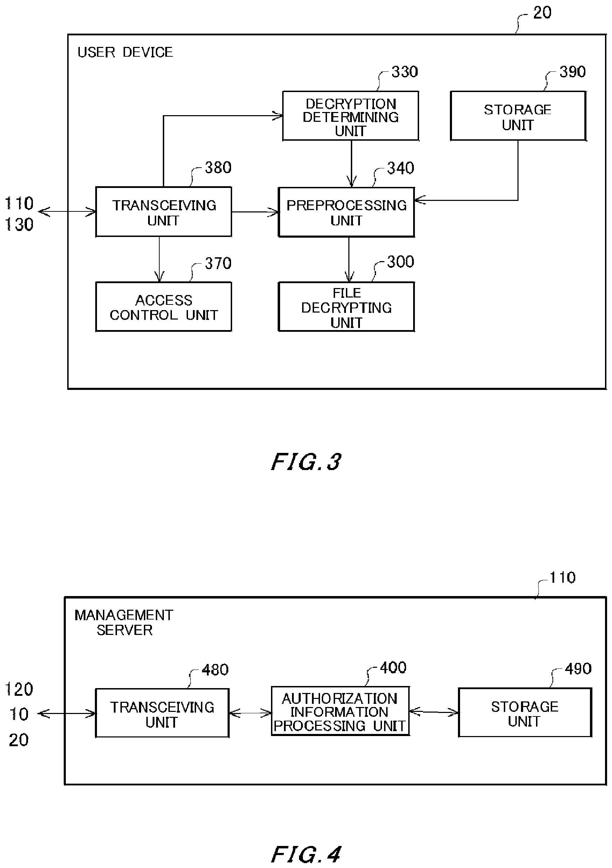

FIG. 3 schematically illustrates the block configuration of the user device 20. The user device 20 has a file decrypting unit 300, a preprocessing unit 340, a decryption determining unit 330, an access control unit 370, a storage unit 390 and a transceiving unit 380.

The transceiving unit 380 performs communication via the communication network 70. The transceiving unit 380 communicates with the management server 110, the file sharing server 130, etc. The transceiving unit 380 is realized by a communication apparatus such as a network interface. The storage unit 390 stores therein data such as an electronic file. The storage unit 390 is realized by a recording apparatus such as a hard disk.

The storage unit 390 stores therein an encrypted file. The preprocessing unit 340 extracts file identification information from the encrypted file 40 stored in the storage unit 390. The transceiving unit 380 transmits the extracted file identification information to the management server 110, and receives a file decryption key and access right information from the management server 110. The file decrypting unit 300 decrypts the encrypted file 40 by using the file decryption key. The data of the electronic file 30 obtained by decryption is displayed on a display apparatus connected to the user device 20, etc. The access control unit 370 controls access to the data of the electronic file 30 based on the access right information. Processes of the decryption determining unit 330 are described below.

FIG. 4 schematically illustrates the block configuration of the management server 110. The management server 110 has an authorization information processing unit 400, a transceiving unit 480 and a storage unit 490.

The transceiving unit 480 performs communication via the communication network 70. The transceiving unit 480 communicates with the cooperating server 120, the user device 10, the user device 20, etc. The transceiving unit 480 is realized by a communication apparatus such as a network interface. The storage unit 490 stores therein data such as authorization information. The storage unit 490 is realized by a recording apparatus such as a hard disk.

The storage unit 490 stores therein management information that associates a file ID, a user ID and access right information indicating a right to access a file by a user identified by the user ID. The authorization information processing unit 400 acquires, from the storage unit 490, access right information that is associated with a file ID and a user ID. The access right information acquired by the authorization information processing unit 400 is transmitted to the user device 20 via the transceiving unit 480.

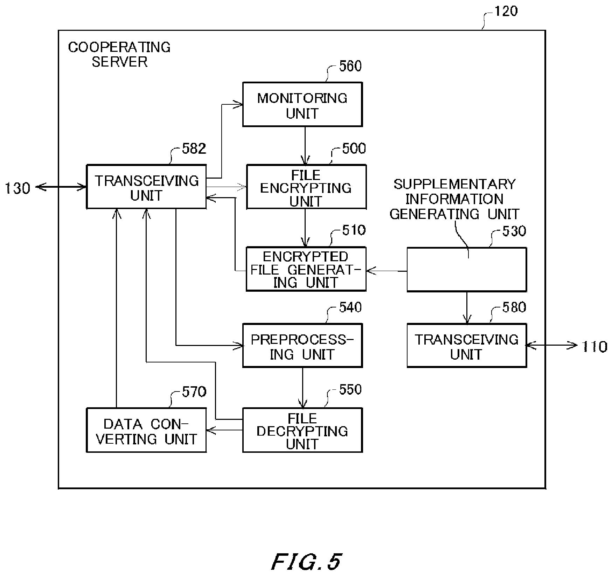

FIG. 5 schematically illustrates the block configuration of the cooperating server 120. The cooperating server 120 has a file encrypting unit 500, an encrypted file generating unit 510, a supplementary information generating unit 530, a preprocessing unit 540, a file decrypting unit 550, a data converting unit 570, a monitoring unit 560, a transceiving unit 580 and a transceiving unit 582.

The transceiving unit 580 performs communication via the communication network 70. The transceiving unit 580 communicates with the management server 110. The transceiving unit 582 performs communication via the communication network 70. The transceiving unit 582 communicates with the file sharing server 130. The transceiving unit 580 and the transceiving unit 582 are realized by communication apparatuses such as a network interface. Functions and operation of respective other units of the cooperating server 120 are described below.

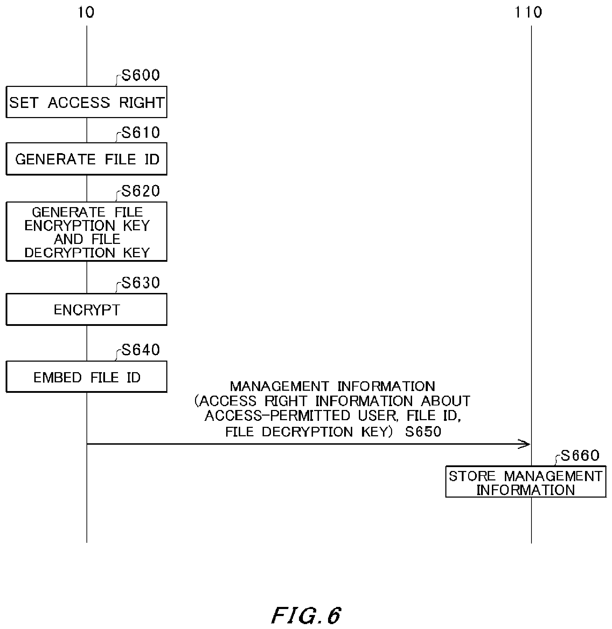

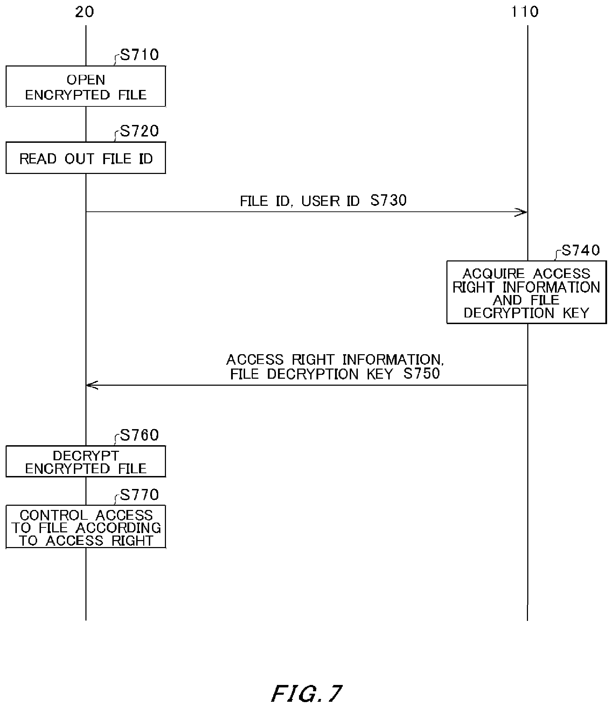

First, basic operation of the user device 10, the user device 20 and the management server 110 is explained by referring to FIG. 6 and FIG. 7.

FIG. 6 illustrates a processing sequence in a case where the electronic file 30 is encrypted in the user device 10. At S600, the supplementary information generating unit 230 sets access right information for data of the electronic file 30 according to an access right designated by the user 180. For example, the user 180 designates an access-permitted user who is permitted to access the data of the electronic file 30. Also, the user 180 designates access right information including the contents of operation that an access-permitted user is permitted to perform or prohibited from performing on the data of the electronic file 30. Examples of the contents of permitted or prohibited operation on the data of the electronic file 30 include viewing, printing, watermark printing, editing, saving, copying of data to a memory region such as a clipboard, capturing of a display screen, the number of times of viewing, a viewing-allowed period, etc.

At S610, the supplementary information generating unit 230 generates a file ID identifying the electronic file 30. The file ID is one example of information identifying the electronic file 30 among a plurality of files access of which is managed by the management server 110.

At S620, the file encrypting unit 200 generates a file encryption key and a file decryption key. At S630, the file encrypting unit 200 encrypts the electronic file 30 by using the file encryption key. At S640, the encrypted file generating unit 210 generates the encrypted file 40 including the file ID generated at S610, and the data of the electronic file 30 encrypted by the file encrypting unit 200.

Subsequently, the transceiving unit 280 transmits, to the management server 110, management information including the access right information generated at S600, the file ID generated at S610 and the file decryption key generated at S620 (S650). The management information received at the management server 110 is stored in the storage unit 490 (S660). Specifically, the access right information is stored in the storage unit 490 in association with the file ID and the user ID identifying an access-permitted user. It should be noted that the user 180 who is the creator of the encrypted file 40 can alter the access right information corresponding to the encrypted file 40 stored in the storage unit 390 after the management information is stored in the storage unit 390. For example, the user 180 may access the management server 110 by using the user device 10 to alter the access right information. Also, the user 180 may receive, through the communication network 70, a request to alter the access right information from the user 190 or another user, and alter the access right information in response to the alteration request. For example, the management server 110 receives, through the communication network 70, a request to alter the access right information. Examples of the request to alter access right information include a request to additionally give other authority such as editing authority to the user 190 who is an access-permitted user, a request to additionally give viewing authority to another user who is not an access-permitted user, or other requests. The authorization information processing unit 400 transmits, to the user 180 via transceiving unit 480, a request to alter the access right information. When an instruction by the user 180 to permit the contents to be altered is accepted at the user device 10, a response indicating approval of the alteration request is transmitted to the management server 110 via the transceiving unit 280. At the management server 110, under the condition that the response indicating approval of the alteration request has been received, the authorization information processing unit 400 alters the access right information according to the contents to be altered requested in the alteration request.

FIG. 7 illustrates a processing sequence in a case where the encrypted file 40 is accessed in the user device 20. At S710, if it is instructed by the user 190 to open the encrypted file 40, the preprocessing unit 340 reads out a file ID from the encrypted file 40 (S720).

At S730, the transceiving unit 380 transmits, to the management server 110, the user ID of the user 190 and the file ID read out at S720. At S740, the authorization information processing unit 400 reads out the file decryption key and the access right information of the user 190 for the data of the electronic file 30 identified with the file ID. Specifically, the authorization information processing unit 400 acquires the file decryption key and the access right information stored in the storage unit 490 in association with the received file ID and user ID. The transceiving unit 480 transmits the acquired access right information and file decryption key to the user device 20 (S750).

At S760, the file decrypting unit 300 decrypts the encrypted file 40 by using the received file decryption key. Specifically, the file decrypting unit 300 decrypts the data portion of the encrypted electronic file 30 included in the encrypted file 40.

At S770, the access control unit 370 controls access to the data of the decrypted electronic file 30 according to the access authorization information. For example, when the user 190 is prohibited from editing the electronic file 30, the access control unit 370 does not accept user operation to alter the data of the electronic file 30. The access control unit 370 may respond with NOP to user operation to alter the data of the electronic file 30.

It should be noted that control on the data of the encrypted file 40 and the electronic file 30 at the user device 20 may be implemented by using at least one of code injection, such as DLL injection, and API hook. As one example, a case where access to the encrypted file 40 by a viewing application used for viewing the electronic file 30 is controlled by using DLL injection and API hook is explained. The viewing application may be application software provided by a third-party which is different from the provider of the IRM software. Also, the file name extension of the encrypted file 40 is associated with a viewing application in the operating system (OS), and when the encrypted file 40 is to be opened, the viewing application is activated. As one example, it is assumed that the electronic file 30 is a document file, the OS is Windows (registered trademark), and the viewing application is Word (registered trademark). The file name extension of the encrypted file 40 may be the predetermined extensions of the viewing application such as ".doc" or ".docx".

At S710, when the OS is instructed to open the encrypted file 40, the viewing application is activated under the control of the OS. At the time of activation of the viewing application, a program code to realize a process of the API used in the viewing application is arranged on a memory mapped to a process of the viewing application. For example, a program code to realize a process of CreateFile API to return a file handle for accessing a file is arranged on the memory. Here, the access control unit 370 inserts, by DLL injection, a program code for file control to realize the processes of S720, S730 and S760 into the process of the activated viewing application. Also, the access control unit 370 relates, by API hook, an address on the memory, on which the inserted program code is arranged, with CreateFile API. Thereby, when the encrypted file 40 is designated in the viewing application to call up CreateFile API, a process of the inserted program code for file control is actually executed in place of the OS's original process of CreateFile API.

The process of the inserted program code for file control is explained. The OS's original process of the address related with the CreateFile API is executed, and a file handle of the encrypted file 40 is acquired. Also, the file handle is designated to call up ReadFile API, and the contents of the encrypted file 40 are acquired. Then, based on the contents of the encrypted file 40, it is determined whether or not it is an encrypted file conforming to the IRM software, and when the encrypted file 40 is not an encrypted file conforming to the IRM software, the acquired file handle is returned. When the encrypted file 40 is an encrypted file conforming to the IRM software, the file ID embedded in the encrypted file 40 is read out (S720). Subsequently, by communication with the management server 110, the processes of S730 and S750 are performed. Then, encrypted data of the electronic file 30 in the encrypted file 40 is decrypted on the memory, and the decrypted data of the electronic file 30 is arranged on the memory. Then, a file handle designating the address of the decrypted data of the electronic file 30 arranged on the memory is returned. Thereby, it becomes possible to access the electronic file 30 in the viewing application. In this manner, by the operation of the viewing application, S720, S730, S760 and S760 are performed. Thereby, it is possible to access the data of the electronic file 30 in the encrypted file 40 without writing the decrypted data of the electronic file 30 on a non-volatile recording medium.

Next, access control at S770 is explained. The access control unit 370 inserts, by DLL injection, a program code for data access control for accessing the data of the electronic file 30 according to an access right into a process of the viewing application, in addition to the above-mentioned program code for file control. Then, by API hook, the address of a program code for data access control is related with an access control target API. As one example, the access control unit 370 relates the address of a program code for clipboard operation control included in the program code for data access control with SetClipboardData API. Thereby, upon execution of a process of calling up SetClipboardData API in the viewing application, the inserted process of the program code for clipboard operation control is executed in place of the OS's original process of SetClipboardData API. When the user 190 is prohibited from performing data copy to the clipboard, NULL is returned due to the process of the program code for clipboard operation control. On the other hand, when the user 190 is permitted to perform data copy to the clipboard, the OS's original process of the address related with SetClipboardData API is executed, and a return value returned from the process of SetClipboardData API is returned. Thereby, clipboard operation in the viewing application can be controlled according to an access right determined for the user 190 about data copy to the clipboard. Access rights other than those about data copy to the clipboard may also be controlled similarly by DLL injection and API hook. As explained above, by using DLL injection and API hook, access control can be performed on the viewing application, ranging from a file process at the time of opening the encrypted file 40 to a data access process on the data of the electronic file 30 in the encrypted file 40.

It should be noted that at S740, when the user 190 is not included in access-permitted users, the authorization information processing unit 400 may transmit, to the user device 20, an indication that viewing is rejected. For example, when access right information is not stored in the storage unit 490 in association with the user ID and file ID received at S730, the authorization information processing unit 400 may transmit, to the user device 20, an indication that viewing is rejected. In this case, at the user device 20, control is performed by the access control unit 370 such that the user 190 cannot view the electronic file 30 in the encrypted file 40. Specifically, the access control unit 370 closes the encrypted file 40 without accessing the data of the electronic file 30 in the encrypted file 40. Also, the access control unit 370 may delete the encrypted file 40 after closing the encrypted file 40. For example, the access control unit 370 may delete the data of the encrypted file 40 from the storage unit 390. In this manner, the access control unit 370 may prohibit viewing of the electronic file 30 by prohibiting opening of the data of the electronic file 30 in the encrypted file 40. Also, the access control unit 370 may prohibit viewing of the electronic file 30 by deleting the encrypted file 40.

Next, a case where the electronic file 30 is shared in the file sharing server 130 is explained.

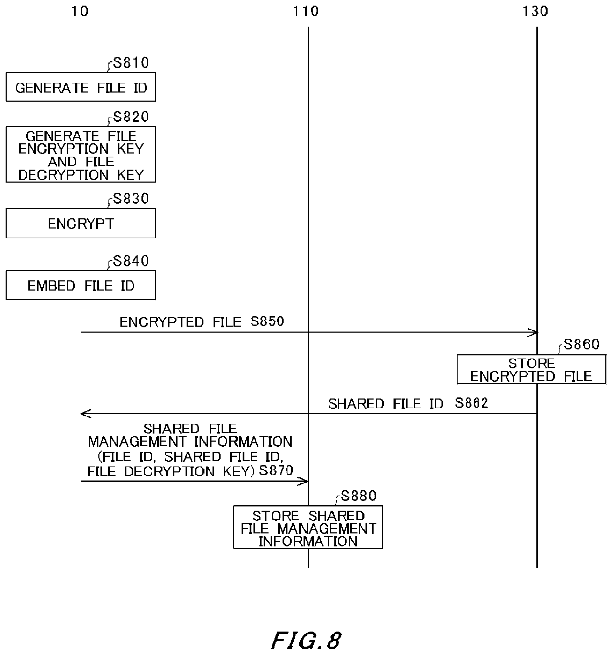

FIG. 8 illustrates a processing sequence in a case where the electronic file 30 is shared in the file sharing server 130. When at the user device 10, an instruction to encrypt the electronic file 30 has been issued by operation of the user 180, the supplementary information generating unit 230 generates a file ID (S810), generates a file encryption key and a file decryption key (S820), encrypts the electronic file 30 (S830), and embeds the file ID in the encrypted file (S840). Specific processing at S810 to S840 is similar to the processing at S610 to S640 of FIG. 6, and so explanation thereof is omitted.

Subsequently, at S850, the transceiving unit 280 transmits the encrypted file 40 in which the file ID has been embedded to the file sharing server 130, and uploads it to a predetermined shared folder. At S860, the file sharing server 130 stores the encrypted file 40 in a predetermined folder. The transceiving unit 480 receives the shared file ID from the file sharing server 130 (S862). The shared file ID is one example of identification information identifying the encrypted file 40 from a plurality of files stored in the file sharing server 130.

At S870, the transceiving unit 280 transmits, to the management server 110, management information including the file ID generated at S810, the shared file ID and the file decryption key. At the management server 110, the storage unit 490 stores therein the management information received by the transceiving unit 480 (S880).

In this manner, the storage unit 490 stores therein, in association with each other, the shared file ID identifying an electronic file in the file sharing server 130 and the file ID which is file identification information identifying the electronic file 30. It should be noted that the shared file ID is one example of restriction specifying information for specifying a restriction imposed by the file sharing server 130 on access to an electronic file stored in the file sharing server 130. The access restriction imposed by the file sharing server 130 is acquired by inquiring the file sharing server 130 by using the shared file ID.

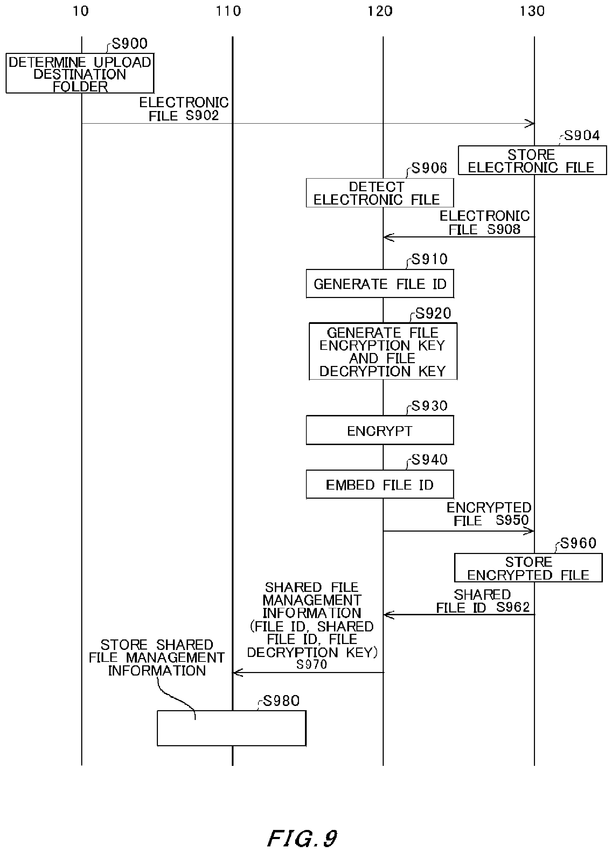

FIG. 9 illustrates a processing sequence according to another method in which the electronic file 30 is shared in the file sharing server 130. The present processing sequence is a processing sequence in a case where the electronic file 30 is uploaded to the file sharing server 130 without being encrypted.

At S900, when an instruction to upload the electronic file 30 is issued based on user operation by the user 180, at monitoring unit 260, a shared folder to which the electronic file 30 is to be uploaded is specified. For example, when operation of dragging an icon of the electronic file 30 to a predetermined icon is performed by the user 180, an upload function of the IRM software installed on the user device 10 is activated, and the monitoring unit 260 uploads, via the transceiving unit 280, the electronic file 30 to a shared folder in the file sharing server 130 that is associated with the predetermined icon. To which shared folder the electronic file 30 dropped on a predetermined icon is uploaded may be set by user setting of the IRM software, etc.

At S902, the transceiving unit 280 transmits the electronic file 30 to the file sharing server 130. At S904, the file sharing server 130 stores therein the electronic file 30. Here, the monitoring unit 560 monitors an electronic file stored in a predetermined folder in the file sharing server 130. Specifically, the monitoring unit 560 is monitoring an electronic file uploaded to a predetermined shared folder in the file sharing server 130. Upon detection by the monitoring unit 560 of a new electronic file 30 being stored (S906), the transceiving unit 582 downloads the electronic file 30 from the shared folder (S908).

The supplementary information generating unit 530 generates a file ID (S910), the file encrypting unit 500 generates a file decryption key and a file encryption key (S920) and encrypts the electronic file 30 (S930), and the encrypted file generating unit 510 embeds the file ID (S940). Specific contents of processing at S910 to S940 is similar to the processing at S610 to S640 of FIG. 6, and so explanation thereof is omitted. In this manner, when an electronic file is newly stored in a predetermined folder in the file sharing server 130, the encrypted file generating unit 510 acquire the newly stored electronic file from the file sharing server 130, and embeds a file ID identifying the electronic file in the electronic file. Specifically, when an electronic file is newly stored in a predetermined folder in the file sharing server 130, the encrypted file generating unit 510 encrypts the electronic file and embeds a file ID in the encrypted file.

Subsequently, at S950, the transceiving unit 582 transmits the encrypted file 40 in which the file ID is embedded to the file sharing server 130, and uploads it to a predetermined shared folder. In this manner, the transceiving unit 582 causes the file sharing server 130 to store therein an electronic file in which a file ID is embedded.

At S960, the file sharing server 130 stores the encrypted file 40 in a predetermined folder. The transceiving unit 580 receives a shared file ID from the file sharing server 130 (S962). The shared file ID is one example of identification information identifying the encrypted file 40 from a plurality of files stored in the file sharing server 130.

At S970, the transceiving unit 580 transmits, to the management server 110, management information including the file ID generated at S910, the shared file ID received at S962, and file decryption key generated at S920. At the management server 110, the storage unit 490 stores therein, as shared file management information, management information that the transceiving unit 480 has received from the cooperating server 120 (S980). In this manner, the storage unit 490 stores therein, in association with each other, information identifying an electronic file that is stored in the file sharing server 130 and in which a file ID is embedded, and a file ID. More specifically, the storage unit 490 stores therein, in association with each other, a shared file ID, a file ID and a file decryption key required for decryption of an encrypted file.

It should be noted that in the sequence of FIG. 9, the electronic file 30 is uploaded via control of the IRM software. However, a shared file may be uploaded via a WEB browser. Also, the electronic file 30 may be uploaded by copying the electronic file 30 to a local folder mounted as a network drive etc. In this case, the shared file management information can be stored in the management server 110 by the processing sequence of and after S806 of FIG. 9. Also, the IRM software is not required to be installed on the user device 10.

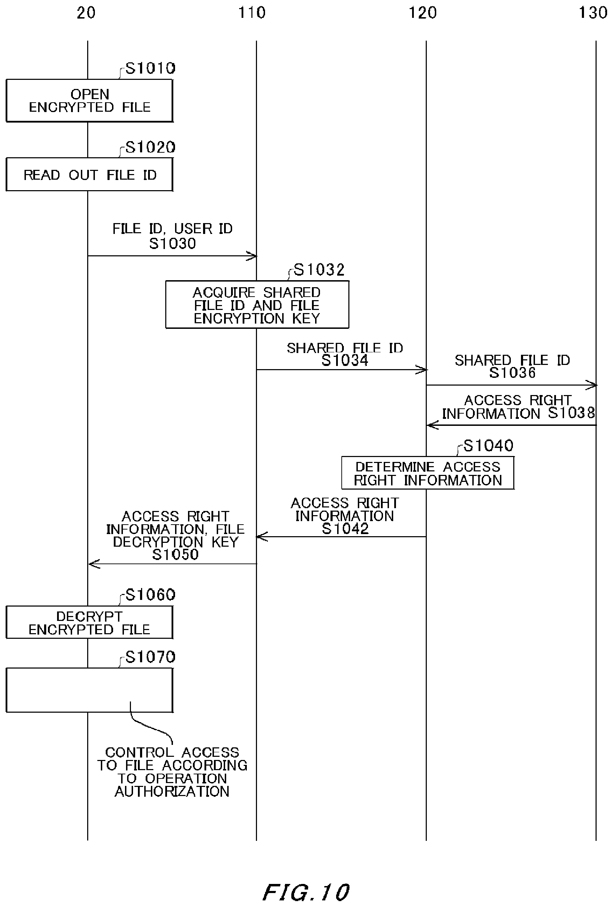

FIG. 10 illustrates a processing sequence in a case where the user device 20 accesses the encrypted file 40 downloaded from the file sharing server 130. At S1010, when an instruction to open the encrypted file 40 is issued by the user 190, the preprocessing unit 340 reads out a file ID from the encrypted file 40 (S1020). At S1030, the transceiving unit 380 transmits, to the management server 110, the file ID read out at S1020 and the user ID of the user 190.

In this manner, the user device 20 transmits the file ID to the access management system when opening an electronic file downloaded from the file sharing server 130. Specifically, the user device 20 transmits, to the access management system, the file ID embedded in the electronic file downloaded from the file sharing server 130.

Subsequently, the authorization information processing unit 400 acquires, as shared file management information, a shared file ID and a file decryption key stored in the storage unit 490 in association with the received file ID (S1032). When having acquired the shared file ID and the file decryption key, the authorization information processing unit 400 judges that a file identified by the file ID is the encrypted file 40 shared in the shared folder. In this case, the transceiving unit 480 transmits, to the cooperating server 120, a shared file ID associated with the file ID in the shared file management information (S1034).

At S1036, the transceiving unit 582 transmits the received shared file ID to the file sharing server 130 (S1036), and requests access right information for the encrypted file 40 identified by the shared file ID. The access right information is one example of information about a restriction imposed on a user by the file sharing server 130. The file sharing server 130 transmits, to the cooperating server 120, information indicating an access right set for a shared folder in which the encrypted file 40 is stored (S1038). When the transceiving unit 582 has received information indicating an access right set for the shared folder, the information is converted into access right information in the user device 20 (S1040), and the transceiving unit 580 transmits the obtained access right information to the management server 110 (S1042). The transceiving unit 480 transmits, to the user device 20, the received access right information and the file decryption key acquired at S1032 (S1050). It should be noted that the access right information is one example of access control information for controlling access to the electronic file 30 in the user device 20.

At S1060, the file decrypting unit 300 decrypts the encrypted file 40 by using the received file decryption key. Then, at S1070, the access control unit 370 controls access to the data of the decrypted electronic file 30 according to the access authorization information. Processing at S1060 to S1070 is similar to the processing at S760 to S770 of FIG. 7, and so explanation thereof is omitted. It should be noted that the decision of the access right information at S1040 in the present processing sequence may be made not by the cooperating server 120 but by the management server 110. For example, the cooperating server 120 may transfer the access right information received from the file sharing server 130 at S1038 to the management server 110 without making the decision of the access right information at S1040, and the authorization information processing unit 400 of the management server 110 may decide the access right.

As explained in relation to FIG. 8, FIG. 9, etc., once the encrypted file 40 is stored in the file sharing server 130, association between the file ID embedded in the encrypted file 40 and the shared file ID in the file sharing server 130 can be managed by the management server 110. For this reason, even after the encrypted file 40 is downloaded, the encrypted file 40 and a file in the file sharing server 130 can be associated with each other. Thereby, as explained in FIG. 10, etc., access about the encrypted file 40 after being downloaded from the file sharing server 130 can be controlled according to the access right information of the shared folder. Also, even if the access right of the shared folder is altered after the file sharing server 130 is downloaded, access to the data of the electronic file 30 included in the downloaded encrypted file 40 can be controlled according to the access right after the alteration.

In this manner, at the management server 110, the transceiving unit 480 receives, from the user device 20, a file ID of an electronic file accessed by the user device 20. The transceiving unit 480 receives, from the file sharing server 130, access right information indicating a restriction imposed by the file sharing server 130 on access to an electronic file by the user device 20 based on a shared file ID stored in the storage unit 490 in association with the file ID received by the transceiving unit 480. Then, at the management server 110, the transceiving unit 480 transmits, to the user device 20, access control information according to the access right information for controlling access to an electronic file in the user device 20.

The restriction information about access in the file sharing server 130 may include information indicating a user whose access to an electronic file is permitted or prohibited by the file sharing server 130. In this case, the transceiving unit 480 receives, from the user device 20, the file ID and the user ID identifying a user of the user device 20. When having determined that the user of the user device 20 is accessible to an electronic file stored in the file sharing server 130 based on the user ID and the restriction information, the transceiving unit 480 transmits access control information to the user device 20.

In this manner, the storage unit 490 stores therein, in association with each other, a shared file ID, a file ID and a file decryption key required for decryption of an encrypted file, and when having determined that the user of the user device 20 is accessible to an electronic file stored in the file sharing server 130, the transceiving unit 480 transmits, to the user device 20, a file decryption key stored in the storage unit 490. It should be noted that the storage unit 490 may not store a shared file ID. For example, at the management server 110, the transceiving unit 480 may receive a shared file ID corresponding to the electronic file 30 by inquiring, by using a file ID, of an external server managing the shared file ID, and receive access right information from the file sharing server 130 based on the received file ID. Other than this, at the management server 110, the transceiving unit 480 may receive access right information for the electronic file 30 by inquiring, by using a file ID, of an external server managing the access right information. In this case, an external server may be the file sharing server 130 or may be a server other than the file sharing server 130. In this manner, the transceiving unit 480 may receive, from an external server, etc., access right information indicating a restriction imposed by the file sharing server 130 on access, by the user device 20, to an electronic file that is identified by the received file ID and stored in the file sharing server 130.

It should be noted that the access right information at the file sharing server 130 includes information indicating operation on an electronic file that a user is permitted to perform or prohibited from performing by the file sharing server 130. The access right information is set for each folder in the file sharing server 130. At the management server 110, when having determined that the user 190 of the user device 20 is accessible to an electronic file stored in the file sharing server 130, the transceiving unit 480 generates, based on the access right information at the file sharing server 130, information indicating operation on an electronic file that the user 190 should be permitted to perform or prohibited from performing, and transmits the information to the user device 20. It should be noted that the operation includes at least one of: operation of viewing an electronic file; operation of editing an electronic file; operation of printing an electronic file; operation of saving an electronic file, operation of copying data included in an electronic file; and operation of capturing a display screen of an electronic file.

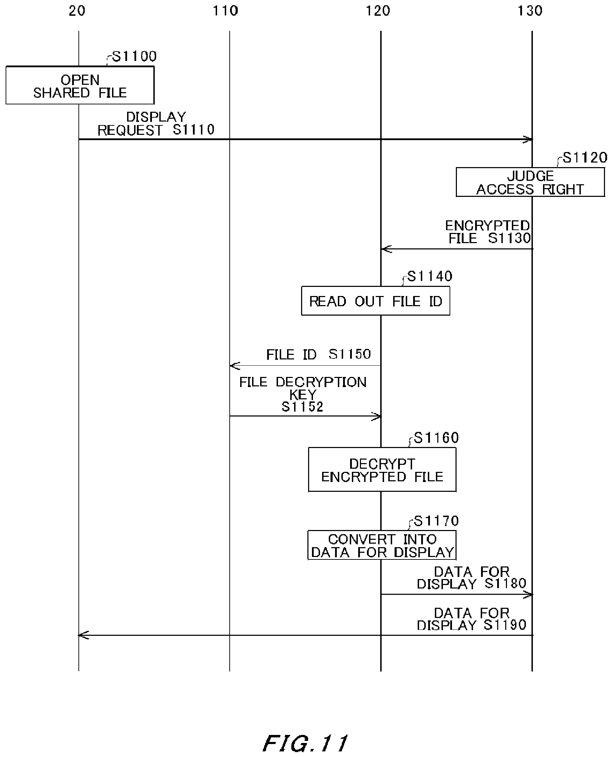

FIG. 11 illustrates a processing sequence in a case where the encrypted file 40 shared in the file sharing server 130 is displayed through browsing software such as a WEB browser.

When the user 190 instructs to open a shared file on browsing software (S1100), the transceiving unit 380 of the user device 20 transmits, to the file sharing server 130, an instruction to display the encrypted file 40 (S1110). A file stored in the file sharing server 130 can be accessed through an external service. The user 190 utilizes an external service provided by the cooperating server 120 to instruct the file sharing server 130 to open the encrypted file 40.

At the file sharing server 130, an access right of the user 190 about the encrypted file 40 is judged according to an access right set for the shared folder (S1120). When the user 190 has an access right, the file sharing server 130 transmits data of the encrypted file 40 to the cooperating server 120 (S1130). When the transceiving unit 582 has received the data of the encrypted file 40, the preprocessing unit 540 reads out a file ID from the data of the received encrypted file 40 (S1140). Subsequently, the transceiving unit 580 transmits the file ID read out to the management server 110 (SI150).

At the management server 110, when the transceiving unit 480 has received a file ID, the authorization information processing unit 400 acquires a file decryption key associated with the file ID in the shared file management information. The transceiving unit 480 transmits the acquired file decryption key to the cooperating server 120 (S1152).

At the cooperating server 120, the file decrypting unit 550 decrypts the encrypted file 40 received at S1130 by using the file decryption key received by the transceiving unit 580 (S1160). The data converting unit 570 converts the data of the electronic file 30 obtained at S1160 into data for display (S1170). Examples of the format of data for display include PDF, HTML, image data, etc. At S1180, the transceiving unit 582 transmits the data for display to the file sharing server 130. At S1190, the data for display is transmitted from the file sharing server 130 to the user device 20. In this manner, the file decrypting unit 550 acquires an encrypted file stored in the file sharing server 130 from the file sharing server 130, and decrypts the encrypted file by using a file decryption key. Then, the data converting unit 570 converts the decrypted electronic file into data for display, and the transceiving unit 582 transmits the data for display to the file sharing server 130.

As explained in relation to FIG. 8 to FIG. 10, etc., an access right set at the file sharing server 130 about the encrypted file 40 stored in the file sharing server 130 can be applied to the encrypted file 40 after being downloaded from the file sharing server 130. Thereby, it becomes easy for a large number of users to share the encrypted file 40 while suppressing occurrence of security related accidents such as data leakage.

It should be noted that in relation to FIG. 9, display control in which when a file on the file sharing server 130 is to be displayed, the cooperating server 120 converts an encrypted file into display data, and the user device 20 is caused to display the display data was explained. A similar process can be applied to a case where a file at another location other than the file sharing server 130 is to be displayed. For example, when an instruction to open the encrypted file 40 has been issued at the user device 20, the encrypted file 40 may be transmitted to an external data conversion server, and the display data received from the external data conversion server may be displayed at the user device 20. Such control is suitable, for example, to a case where the user device 20 is a new terminal such as a mobile terminal, and a case where access control based on an access right cannot be realized sufficiently on a mobile terminal. In such cases, it may be desirable in some cases to cause an external server to generate display data, and cause a viewer that can perform access control sufficiently to display the display data on the mobile terminal.

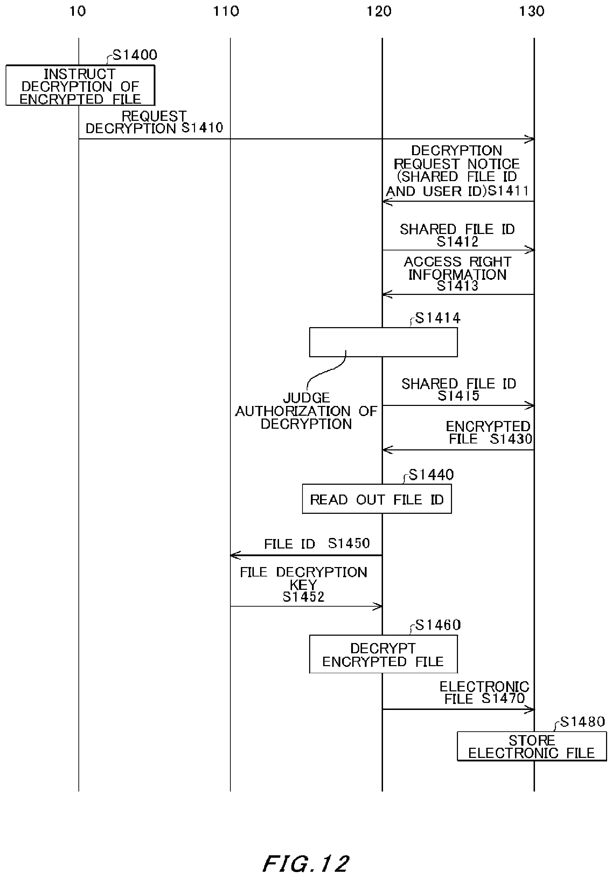

FIG. 12 illustrates a processing sequence in a case where the encrypted file 40 on the file sharing server 130 is converted back to the electronic file 30 before encryption.

When the user 180 selects, through browsing software, the encrypted file 40 stored in the file sharing server 130, and selects a menu item for instructing decryption of the encrypted file 40 (S1400), the transceiving unit 280 of the user device 10 transmits, to the file sharing server 130, a request to decrypt the selected encrypted file 40 (S1410). The file sharing server 130 provides a menu for processing a shared file by utilizing an external service provided by the cooperating server 120, and the user 180 can instruct the file sharing server 130 to decrypt the selected encrypted file 40 by selecting a menu item for instructing decryption of the encrypted file 40 from the menu.

The file sharing server 130 transmits, to the cooperating server 120, a decryption request notice that decryption of the encrypted file 40 has been requested, together with the shared file ID of the designated encrypted file 40 and the user ID of the user 180 (S1411).

At the cooperating server 120, when the decryption request notice has been received, the transceiving unit 582 transmits, to the file sharing server 130, the shared file ID received together with the decryption request notice (S1412), and requests access right information for the encrypted file 40 identified by the shared file ID. The file sharing server 130 transmits, to the cooperating server 120, information indicating an access right set for the shared folder in which the encrypted file 40 is stored (S1413).

At the cooperating server 120, when the transceiving unit 582 has received, from the file sharing server 130, information indicating an access right, it is judged whether or not the user of the user ID received at S1411 is authorized for decryption based on the received access right information (S1414). For example, the access right information includes information indicating whether or not it is the owner of a file, and when the access right information received at S1413 includes information indicating that it is the owner of the file with the shared file ID received at S1411, it may be judged that the user is authorized for decryption. When it is judged that the user is authorized for decryption, the transceiving unit 582 transmits, to the file sharing server 130, a request for the encrypted file 40 together with the shared file ID of the encrypted file 40 (S1415), and receives the data of the encrypted file 40 from the file sharing server 130 (S1430). It should be noted that when it is judged that the user is not authorized for decryption at S1414, the transceiving unit 582 notices the file sharing server 130 that decryption cannot be performed, and the notice is transmitted to the user device 10 through the file sharing server 130.

Upon receiving the data of the encrypted file 40, the preprocessing unit 540 reads out a file ID from the received data of the encrypted file 40 (S1440). Subsequently, the transceiving unit 580 transmits the file ID read out to the management server 110 (S1450), and requests a file decryption key.

At the management server 110, when the transceiving unit 480 has received the file ID, the authorization information processing unit 400 acquires a file decryption key associated with the file ID in the shared file management information. The transceiving unit 480 transmits the acquired file decryption key to the cooperating server 120 (S1452).

At the cooperating server 120, the file decrypting unit 550 decrypts the encrypted file 40 received at S1430 by using the file decryption key received by the transceiving unit 580 (S1460). At S1470, the transceiving unit 582 transmits, to the file sharing server 130, the electronic file 30 obtained by decryption at S1460. The file sharing server 130 stores, in a shared folder, the electronic file 30 received from the cooperating server 120 (S1480). It should be noted that after storing the electronic file 30 in the shared folder, the file sharing server 130 may delete the encrypted file 40 that is designated to decrypt.

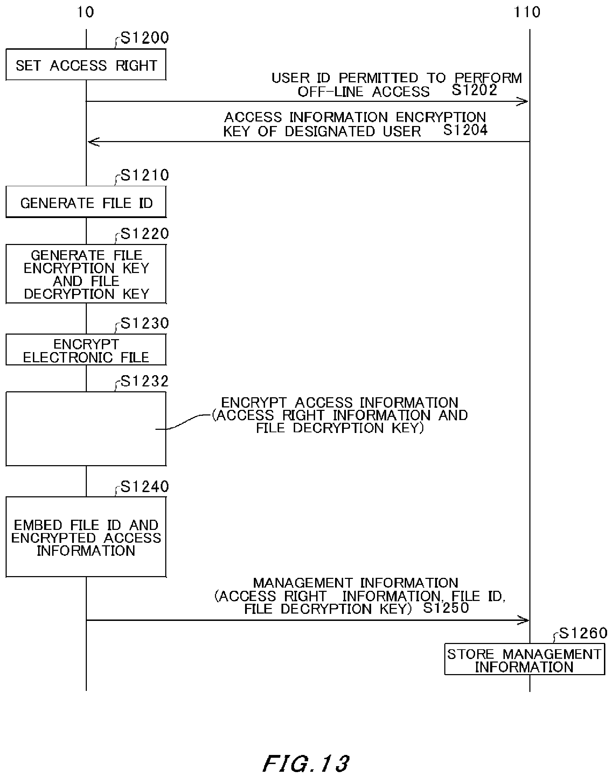

FIG. 13 illustrates another example of an encryption process in the user device 10. The encryption scheme of FIG. 13 enables access to the data of the electronic file 30 in the encrypted file 40 even when the user device 20 cannot communicate with the management server 110.

It should be noted that, for simplicity, the state where the user device 20 cannot communicate with the management server 110 is called an "off-line state."
At the management server 110, for a user who is permitted to access an encrypted file in an off-line state, an access information encryption key used for encryption of access information and an access information decryption key required for decryption of the encrypted access information are issued. For example, the access information encryption key and the access information decryption key are issued by the management server 110. For example, the access information decryption key is issued at the time of installing the IRM software or at other times. The transceiving unit 380 receives the issued access information decryption key from the management server 110. The access information decryption key is stored in the user device 20. Specifically, the access information decryption key is stored in the storage unit 390.

At S1200, the supplementary information generating unit 230 sets access right information for data of the electronic file 30 according to an access right designated by the user 180. For example, the user 180 selects an access-permitted user permitted to access the data of the electronic file 30. Also, the user 180 designates the contents of operation the access-permitted user is permitted to perform or prohibited from performing on the data of the electronic file 30. It should be noted that the access-permitted user and the contents of operation that the access-permitted user is permitted to perform or prohibited from performing are one example of information indicating an access right.

At S1202, the transceiving unit 280 transmits the user ID of the access-permitted user to the management server 110. At the management server 110, the authorization information processing unit 400 transmits, to the user device 10, an access information encryption key issued for the user of the received user ID (S1204). In this manner, the transceiving unit 280 acquires one or more encryption keys determined for respective ones of one or more users permitted to access an electronic file. Specifically, the transceiving unit 280 receives, from the management server 110, one or more encryption keys predetermined for one or more users selected by the user 180.

At S1202, the supplementary information generating unit 230 generates a file ID identifying the electronic file 30, and at S1220, the file encrypting unit 200 generates a file encryption key and a file decryption key. At S1230, the file encrypting unit 200 encrypts the electronic file 30 by using the file encryption key.

At S1232, the supplementary information generating unit 230 encrypts, by using the access information encryption key acquired at S1204, access information including the access authorization information and the file decryption key. In this manner, the supplementary information generating unit 230 encrypts, by using one or more encryption keys, supplementary information including a file decryption key required for decryption of an encrypted file. The supplementary information includes information indicating access rights for electronic files given to respective ones of one or more users.

At S1240, the encrypted file generating unit 210 generates the encrypted file 40 including: the file ID generated at S610; the user ID indicating an access-permitted user; the access information encrypted by the supplementary information generating unit 230; and the data of the electronic file 30 encrypted by the file encrypting unit 200. In this manner, the encrypted file generating unit 210 embeds the encrypted supplementary information in the encrypted file. Also, the encrypted file generating unit 210 embeds, in the encrypted file, user IDs identifying respective ones of one or more users having rights to access the electronic file 30.

Subsequently, the transceiving unit 280 transmits, to the management server 110, management information including the access right information generated at S600, the file ID and the file decryption key (S1250). The management information received at the management server 110 is stored in the storage unit 490 (S1260).

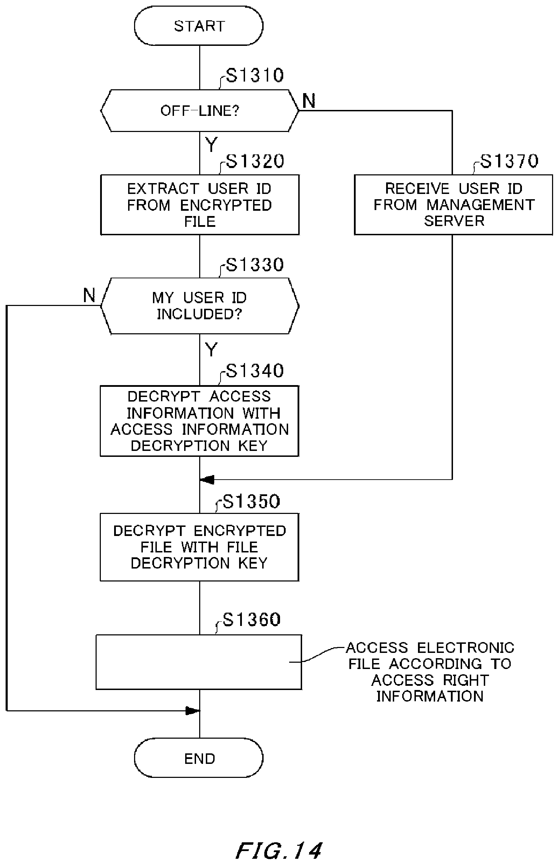

FIG. 14 illustrates a process flow showing operation in a case where the user device 20 accesses the encrypted file 40. The process flow of FIG. 14 includes a process in a case where the user device 20 accesses the encrypted file 40 in an off-line state. The process flow of FIG. 14 is started when it is instructed by the user 190 to open the encrypted file 40. For example, the process flow of FIG. 14 starts when an icon associated with the encrypted file 40 is double-clicked.

The decryption determining unit 330 determines whether or not it is in an off-line state (S1310). Specifically, the decryption determining unit 330 determines whether or not communication with the management server 110 managing a file decryption key is possible.

When it is determined that it is in an off-line state, the preprocessing unit 340 reads out a user ID included in the encrypted file 40 (S1320). Subsequently, it is determined whether or not the user ID read out from the encrypted file 40 includes the user ID of the user 190 (S1330). When the user ID read out from the encrypted file 40 does not include the user ID of the user 190, this process flow ends.

When the user ID read out from the encrypted file 40 includes the user ID of the user 190, the preprocessing unit 340 decrypts access information included in the encrypted file 40 by using an access information decryption key stored in the storage unit 390 (S1340). Thereby, the file decryption key and the access right information are acquired.

Subsequently, the file decrypting unit 300 generates the data of the electronic file 30 by decrypting the encrypted file 40 by using the file decryption key included in the decrypted access information (S1350). In this manner, when it is determined that communication with the management server 110 is possible, the file decrypting unit 300 decrypts the encrypted file by using the file decryption key received from the management server 110. Specifically, the file decrypting unit 300 decrypts the encrypted file by using the file decryption key included in the supplementary information of the encrypted file 40. Subsequently, the access control unit 370 controls access to the generated electronic file 30 based on the decrypted access information (S1360).

When it is determined at S1310 that it is not in an off-line state, the file decryption key and the access information are received from the management server 110 (S1370). The process of S1370 corresponds to the process according to S720 to S750 in FIG. 7. Upon completion of the process of S1370, the flow proceeds to the process of S1350.

As explained about this flow, the preprocessing unit 340 decrypts the encrypted supplementary information embedded in an encrypted file. Specifically, when it is determined that communication with the management server 110 is not possible, the preprocessing unit 340 decrypts the encrypted supplementary information, and the file decrypting unit 300 decrypts the encrypted file by using the file decryption key included in the decrypted supplementary information. Then, the decryption determining unit 330 determines whether or not the user ID of the user 190 of the user device 20 is embedded in the encrypted file, and when it is determined that the user ID of the user of the user device 20 is embedded in the encrypted file, the preprocessing unit 340 decrypts the encrypted supplementary information, and the file decrypting unit 300 decrypts the encrypted file by using the file decryption key included in the decrypted supplementary information.

Thereby, even when the user device 20 in an off-line state, a user can be allowed to access the data of the electronic file 30 according to a set access right. For example, operation about file operation such as viewing, printing, watermark printing, editing, saving, copying of data to a memory region such as a clipboard, capturing of a display screen, etc. can be restricted.

It should be noted that the encrypted supplementary information may not be embedded in the encrypted file 40 itself. The encrypted file generating unit 210 may output the encrypted supplementary information in association with an encrypted file. For example, the encrypted file generating unit 210 may generate, as a separate file associated with the encrypted file 40, a supplementary information file including the encrypted supplementary information. For example, the encrypted file generating unit 210 may generate a supplementary information file with a file name whose extension is different from that of the file name of the encrypted file 40. The supplementary information file may be stored at a location that the user 180 can access in the file system of the user device 10, and may be stored at a location that the user 180 cannot access in the file system of the user device 10. Similarly, when the encrypted file 40 is transmitted to the user device 20, the supplementary information file may be stored at a location that the user 190 can access in the file system of the user device 20, or may be stored at a location that the user 190 cannot access in the file system of the user device 20. The supplementary information file may be managed in the user device 10 or the user device 20 automatically as a file associated with the encrypted file 40 by at least one of the OS and the IRM software. It should be noted that also the user ID only has to be associated with the encrypted file 40 like the supplementary information, and a user ID may not be included in the encrypted file 40 itself.

It should be noted that the access control unit 370 may store, in the user device 20, the number of times of decryption of the encrypted file 40, and when the number of times of viewing has reached an upper limit value designated in the access right information, and reject access to the data of the electronic file 30. Also, the access control unit 370 may acquire local date and time information of the user device 10, and when the current date and time has passed a viewing-allowed period, reject access to the data of the electronic file 30.

Also, although it was explained in the above-mentioned embodiment that a file encryption key is used for encryption of the electronic file 30 and a file decryption key is used for decryption of the encrypted file 40, the file encryption key and the file decryption key may be the same key or different keys. When the same key is used as the file encryption key and the file decryption key, a single common key for encryption of the electronic file 30 and decryption of the encrypted file 40 is generated at S620, S820, S920 and S1220, and the electronic file may be encrypted by using the common key as the file encryption key at S630, S830, S930 and S1220. Then, at S650, S870, S970 and S1250, management information or shared file management information including the common key as the file decryption key may be transmitted to the management server 110 and stored in the management server 110. Then, at S760, S1060, S1160 and S1350, the encrypted file may be decrypted by using the common key.

Also, as mentioned in the above-mentioned embodiment, the monitoring unit 260 monitors a predetermined folder in a file system constructed by using the storage unit 290. When a new electronic file is stored in the predetermined folder, the monitoring unit 260 causes the file encrypting unit 200 to encrypt the new electronic file. The monitoring unit 260 may monitor a plurality of folders. Also, mutually different setting may be able to be set for respective folders. For example, a manager of electronic files may be able to be set for each folder. Also, it may be possible to set for each folder whether or not to create a backup copy of an original electronic file when it is encrypted. Also, a template for access right setting may be able to be set for each folder. Also, setting of an extension to be an encryption target may be able to be set for each folder. Also, setting of an extension to be excluded from encryption targets may be able to be set for each folder. Also, the range of sizes of files to be encryption targets may be able to be set for each folder. For example, the upper limit value and lower limit value of sizes of files to be encryption targets may be able to be set for each folder. The range of sizes of files to be excluded from encryption targets may be able to be set for each folder. For example, the upper limit value and lower limit value of sizes of files to be excluded from encryption targets may be able to be set for each folder. Also, whether only a designated folder is to be handled as a monitoring target or lower-level folders are to be handled as monitoring targets may be able to be set for each folder. Also, the monitoring unit 260 may monitor a plurality of folders in parallel. By realizing the process of the monitoring unit 260 by a plurality of processes according to the number of monitoring target folders, the plurality of folders may be monitored in parallel.

It should be noted that by utilizing the monitoring function, an electronic file generated by external equipment may be encrypted automatically by outputting the electronic file to a monitoring target folder. For example, image data obtained by scanning with scanning equipment can be encrypted automatically by outputting the image data to a monitoring target folder.

Also, a plurality of access rights may be able to be set for a single file. For example, different access rights may be able to be set for different users. For example, a plurality of templates of access rights may be able to be combined to be applied to a single file.

The process explained as operation of the user device 10 in the above-mentioned explanation is realized by a processor controlling each unit of hardware that the user device 10 has according to a program such as the IRM software and basic software. That is, the process of the user device 10 explained in relation to the user device 10 of the present embodiment can be realized by a processor operating according to a program to control each unit of hardware such that each unit of hardware including the processor, a memory, etc. and the program operate in cooperation with each other. For example, the program may function as respective units of the user device 10. That is, the processes can be realized by a so-called computer. The computer may read in a program for controlling execution of the above-mentioned processes, operate according to the program read in, and execute the processes. The computer can load the program from a computer readable recording medium storing the program.

Also, the process explained as operation of the user device 20 in the above-mentioned explanation is realized by a processor controlling each unit of hardware that the user device 20 has according to a program such as the IRM software and basic software. That is, the process of the user device 20 explained in relation to the user device 20 of the present embodiment can be realized by a processor operating according to a program to control each unit of hardware such that each unit of hardware including the processor, a memory, etc. and the program operate in cooperation with each other. For example, the program may function as respective units of the user device 20. That is, the processes can be realized by a so-called computer. The computer may read in a program for controlling execution of the above-mentioned processes, operate according to the program read in, and execute the processes. The computer can load the program from a computer readable recording medium storing the program.

Also, the process explained as operation of the management server 110 in the above-mentioned explanation is realized by a processor controlling each unit of hardware that the management server 110 has according to a program such as the IRM software and basic software. That is, the process of the user device 10 explained in relation to the management server 110 of the present embodiment can be realized by a processor operating according to a program to control each unit of hardware such that each unit of hardware including the processor, a memory, etc. and the program operate in cooperation with each other. For example, the program may function as respective units of the management server 110. That is, the processes can be realized by a so-called computer. The computer may read in a program for controlling execution of the above-mentioned processes, operate according to the program read in, and execute the processes. The computer can load the program from a computer readable recording medium storing the program.

Also, the process explained as operation of the cooperating server 120 in the above-mentioned explanation is realized by a processor controlling each unit of hardware that the cooperating server 120 has according to a program such as the IRM software and basic software. That is, the process of the user device 10 explained in relation to the cooperating server 120 of the present embodiment can be realized by a processor operating according to a program to control each unit of hardware such that each unit of hardware including the processor, a memory, etc. and the program operate in cooperation with each other. For example, the program may function as respective units of the cooperating server 120. That is, the processes can be realized by a so-called computer. The computer may read in a program for controlling execution of the above-mentioned processes, operate according to the program read in, and execute the processes. The computer can load the program from a computer readable recording medium storing the program.

In the explanation above, one example of an access management system including the management server 110 and the cooperating server 120 was explained. Functions of the access management system including the management server 110 and the cooperating server 120 may be realized by any number of servers. For example, functions of the management server 110 and the cooperating server 120 may be realized by a single server. For example, functions of the cooperating server 120 may be implemented in the management server 110. Also, at least one of the management server 110 and the cooperating server 120 may be realized by a plurality of servers.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### [Explanation of Reference Symbols]

10: user device
20: user device
30: electronic file
40: encrypted file
70: communication network
100: system
110: management server
120: cooperating server
130: file sharing server
180, 190: user

## Claims

1. An access management system configured to manage access to an electronic file (30) stored in a file sharing server (130), the access management system comprising:
a file access information receiving unit configured to receive, from a user device (10), file identification information identifying the electronic file (30) to be accessed by the user device (10);
a restriction information receiving unit configured to receive, from the file sharing server (130), restriction information indicating a restriction imposed by the file sharing server (130) on access, by the user device (10), to the electronic file (30) that is identified by the file identification information received by the file access information receiving unit and is stored in the file sharing server (130);
an access control information transmitting unit configured to transmit, to the user device (10), access control information that is for controlling access to the electronic file (30) in the user device (10) and corresponds to the restriction information; and
a restriction specifying information storage unit configured to store therein, in association with each other, restriction specifying information for specifying a restriction imposed on access to the electronic file imposed by the file sharing server (130), and the file identification information, wherein
the restriction information receiving unit is configured to receive the restriction information from the file sharing server (130) based on the restriction specifying information stored in the restriction specifying information storage unit in association with the file identification information received by the file access information receiving unit, and the access management system is configured to acquire the restriction information by inquiring the file sharing server using the restriction specifying information.

2. The access management system according to Claim 1, wherein
the restriction information includes information indicating a user (190) whose access to the electronic file (30) is permitted or prohibited by the file sharing server (130),
the file access information receiving unit is configured to receive, from the user device (10), the file identification information and user identification information identifying a user of the user device (10), and
the access control information transmitting unit is configured to transmit the access control information to the user device (10) when it is determined, based on the user identification information and the restriction information, that the user of the user device (10) is accessible to the electronic file (30) stored in the file sharing server (130).

3. The access management system according to Claim 2, wherein
the file sharing server (130) is configured to store therein an encrypted electronic file (30),
the access management system further comprises a key information storage unit configured to store therein, in association with each other, the file identification information and a file decryption key required for decryption of the encrypted electronic file (30), and
the access control information transmitting unit is configured to transmit, to the user device (10), the file decryption key stored in the key information storage unit when it is determined that the user of the user device (10) is accessible to the electronic file (30) stored in the file sharing server (130).

4. The access management system according to Claim 2 or 3, wherein
the restriction information includes information indicating operation on the electronic file (30) that is permitted or prohibited by the file sharing server (130) for a user to perform, and
the access control information transmitting unit is configured to generate, based on the restriction information, information indicating operation on the electronic file (30) that the user of the user device (10, 20) should be permitted to perform or prohibited from performing and transmits the information to the user device (10) when it is determined that the user of the user device (10) is accessible to the electronic file (30) stored in the file sharing server (130).

5. The access management system according to Claim 4, wherein
the operation includes at least one of: operation of viewing the electronic file (30); operation of editing the electronic file (30); operation of printing the electronic file (30); operation of saving the electronic file (30), operation of copying data included in the electronic file (30); and operation of capturing a display screen of the electronic file (30).

6. The access management system according to any one of Claims 1 to 5, wherein the user device (10) is configured to transmit, to the access management system, the file identification information when opening the electronic file (30) downloaded from the file sharing server (130).

7. The access management system according to Claim 6, wherein
the file identification information is embedded in the electronic file (30), and
the user device (10) is configured to transmit, to the access management system, the file identification information embedded in the electronic file (30) downloaded from the file sharing server (130).

8. The access management system according to Claim 1, further comprising:
a monitoring unit configured to monitor an electronic file (30) stored in a predetermined folder in the file sharing server (130);
a file processing unit configured to: acquire a newly stored electronic file (30) from the file sharing server (130) when the monitoring unit determines that the electronic file (30) is newly stored in the predetermined folder in the file sharing server (130); and embed, in the electronic file (30), file identification information identifying the electronic file (30);
a file storage control unit configured to cause the file sharing server (130) to store therein an electronic file (30) in which the file identification information is embedded; and
a restriction specifying information storage control unit configured to cause the restriction specifying information storage unit to store therein, in association with each other: information identifying an electronic file (30) that is stored in the file sharing server (130) and in which the file identification information is embedded; and the file identification information.

9. The access management system according to Claim 8, wherein
when an electronic file (30) is newly stored in the predetermined folder in the file sharing server (130), the file processing unit is configured to encrypt the electronic file (30), and embeds the file identification information in the encrypted electronic file (30), and
the restriction specifying information storage unit is configured to store therein, in association with each other, the restriction specifying information, the file identification information, and a file decryption key required for decryption of the encrypted electronic file (30).

10. The access management system according to Claim 9, further comprising a data converting unit configured to:
acquire, from the file sharing server (130), the encrypted electronic file (30) stored in the file sharing server (130);
decrypt the encrypted electronic file (30) by using the file decryption key;
convert the decrypted electronic file (30) into data for display; and
transmit the data for display to the file sharing server (130).

11. A file access system (100) comprising:
the access management system according to any one of Claims 1 to 10; and
the user device (10).

12. The file access system (100) according to Claim 11, wherein the user device (10, 20) has:
an encrypting unit configured to encrypt an electronic file (30) by including file identification information identifying the electronic file (30) to be encrypted;
a file storage control unit configured to cause the file sharing server (130) to store therein the encrypted electronic file (30); and
a storage control unit configured to cause the access management system to store therein, in association with each other: restriction specifying information for specifying a restriction imposed by the file sharing server (130) on access to the encrypted electronic file (30) stored in the file sharing server (130); the file identification information; and a file decryption key required for decryption of the encrypted electronic file (30).

13. A computer program comprising instructions which, when the program is executed by a computer, cause the computer carry out the following steps:
receiving, from a user device (10, 20), file identification information identifying the electronic file (30) to be accessed by the user device (10, 20);
receiving, from a file sharing server (130), restriction information indicating a restriction imposed by the file sharing server (130) on access, by the user device (10, 20), to the electronic file (30) that is identified by the file identification information received and is stored in the file sharing server (130);
transmitting, to the user device (10, 20), access control information that is for controlling access to the electronic file (30) in the user device (10, 20) and corresponds to the restriction information,
storing restriction specifying information for specifying a restriction imposed on access to the electronic file (30) imposed by the file sharing server (130) in a restriction specifying information storage unit, in association with the file identification information, and
acquiring the restriction information by inquiring the file sharing server using the restriction specifying information stored in the restriction specifying information storage unit in association with the file identification information received.

## Patentansprüche

1. Zugriffsverwaltungssystem, das konfiguriert ist, Zugriff auf eine elektronische Datei (30) zu verwalten, die in einem Server zur gemeinsamen Dateinutzung (130) gespeichert ist, wobei das Zugriffsverwaltungssystem umfasst:
eine Dateizugriffsinformationenempfangseinheit, die konfiguriert ist, von einer Benutzervorrichtung (10), Dateiidentifikationsinformationen zu empfangen, die die elektronische Datei (30) identifizieren, auf die die Benutzervorrichtung (10) zugreifen soll;
eine Begrenzungsinformationenempfangseinheit, die konfiguriert ist, von dem Server zur gemeinsamen Dateinutzung (130) Begrenzungsinformationen zu empfangen, die eine Begrenzung angeben, die der Server zur gemeinsamen Dateinutzung (130) einem Zugriff durch die Benutzervorrichtung (10) auf die elektronische Datei (30) auferlegt, die durch die Dateiidentifikationsinformationen identifiziert ist, die von der Dateizugriffsinformationenempfangseinheit empfangen werden und im Server zur gemeinsamen Dateinutzung (130) gespeichert sind;
eine Zugriffssteuerungsinformationenübertragungseinheit, die konfiguriert ist, Zugriffssteuerinformationen an die Benutzervorrichtung (10) zu übertragen, die zum Steuern eines Zugriffs auf die elektronische Datei (30) in der Benutzervorrichtung (10) dienen und den Begrenzungsinformationen entsprechen; und
eine Begrenzungsspezifizierungsinformationenspeichereinheit, die konfiguriert ist, in Verknüpfung miteinander, Begrenzungsspezifizierungsinformationen zum Spezifizieren einer Begrenzung, die einem Zugriff auf die elektronische Datei durch den Server zur gemeinsamen Dateinutzung (130) auferlegt ist, und die Dateiidentifikationsinformationen zu speichern, wobei die Begrenzungsinformationenempfangseinheit konfiguriert ist, Begrenzungsinformationen von dem Server zur gemeinsamen Dateinutzung (130) basierend auf den Begrenzungsspezifizierungsinformationen, die in der Begrenzungsspezifizierungsinformationenspeichereinheit gespeichert sind, in Verknüpfung mit den Dateiidentifikationsinformationen zu empfangen, die durch die Dateizugriffsinformationenempfangseinheit empfangen werden, und das Zugriffsverwaltungssystem konfiguriert ist, die Begrenzungsinformationen durch Abfragen des Servers zur gemeinsamen Dateinutzung unter Verwendung der Begrenzungsspezifizierungsinformationen zu erlangen.

2. Zugriffsverwaltungssystem nach Anspruch 1, wobei
die Begrenzungsinformationen Informationen beinhalten, die einen Benutzer (190) angeben, dessen Zugriff auf die elektronische Datei (30) von dem Server zur gemeinsamen Dateinutzung (130) erlaubt oder verboten wird,
die Dateizugriffsinformationenempfangseinheit konfiguriert ist, von der Benutzervorrichtung (10) die Dateiidentifikationsinformationen und Benutzeridentifikationsinformationen, die einen Benutzer der Benutzervorrichtung (10) identifizieren, zu empfangen, und
die Zugriffssteuerungsinformationenübertragungseinheit konfiguriert ist, die Zugriffssteuerinformationen an die Benutzervorrichtung (10) zu übertragen, wenn basierend auf den Benutzeridentifikationsinformationen und den Begrenzungsinformationen bestimmt wird, dass der Benutzer der Benutzervorrichtung (10) für die elektronische Datei (30), die in dem Server zur gemeinsamen Dateinutzung (130) gespeichert ist, zugänglich ist.

3. Zugriffsverwaltungssystem nach Anspruch 2, wobei
der Server zur gemeinsamen Dateinutzung (130) konfiguriert ist, eine verschlüsselte elektronische Datei (30) zu speichern,
das Zugriffsverwaltungssystem weiter eine Schlüsselinformationenspeichereinheit umfasst, die konfiguriert ist, die Dateiidentifikationsinformationen und einen Dateientschlüsselungsschlüssel, der zum Entschlüsseln der verschlüsselten elektronischen Datei (30) erforderlich ist, in Verknüpfung miteinander zu speichern, und
die Zugriffssteuerungsinformationenübertragungseinheit konfiguriert ist, den Dateientschlüsselungsschlüssel, der in der Schlüsselinformationenspeichereinheit gespeichert ist, an die Benutzervorrichtung (10) zu übertragen, wenn bestimmt wird, dass der Benutzer der Benutzervorrichtung (10) für die elektronische Datei (30), die in dem Server zur gemeinsamen Dateinutzung (130) gespeichert ist, zugänglich ist.

4. Zugriffsverwaltungssystem nach Anspruch 2 oder 3, wobei
die Begrenzungsinformationen Informationen beinhalten, die angeben, dass Durchführung eines Betriebs der elektronischen Datei (30) für einen Benutzer durch den Server zur gemeinsamen Dateinutzung (130) erlaubt oder verboten ist, und
die Zugriffssteuerungsinformationenübertragungseinheit konfiguriert ist, basierend auf den Begrenzungsinformationen Informationen zu erzeugen, die Betrieb an der elektronischen Datei (30) angeben, dessen Durchführung für den Benutzer der Benutzervorrichtung (10, 20) erlaubt oder verboten sein sollte, und die Informationen an die Benutzervorrichtung (10) überträgt, wenn bestimmt wird, dass der Benutzer der Benutzervorrichtung (10) für die elektronische Datei (30), die in dem Server zur gemeinsamen Dateinutzung (130) gespeichert ist, zugänglich ist.

5. Zugriffsverwaltungssystem nach Anspruch 4, wobei
der Betrieb mindestens eines beinhaltet von: Betrieb zum Betrachten der elektronischen Datei (30); Betrieb zum Bearbeiten der elektronischen Datei (30); Betrieb zum Drucken der elektronischen Datei (30); Betrieb zum Speichern der elektronischen Datei (30), Betrieb zum Kopieren von Daten, die in der elektronischen Datei (30) beinhaltet sind; und Betrieb zum Aufnehmen eines Anzeigebildschirms der elektronischen Datei (30).

6. Zugriffsverwaltungssystem nach einem der Ansprüche 1 bis 5, wobei die Benutzervorrichtung (10) konfiguriert ist, an das Zugriffsverwaltungssystem die Dateiidentifikationsinformationen zu übertragen, wenn die elektronische Datei (30) geöffnet wird, die von dem Server zur gemeinsamen Dateinutzung (130) heruntergeladen wurde.

7. Zugriffsverwaltungssystem nach Anspruch 6, wobei
die Dateiidentifikationsinformationen in der elektronischen Datei (30) eingebettet sind und
die Benutzervorrichtung (10) konfiguriert ist, an das Zugriffsverwaltungssystem die Dateiidentifikationsinformationen zu übertragen, die in der elektronischen Datei (30) eingebettet sind, die von dem Server zur gemeinsamen Dateinutzung (130) heruntergeladen wurde.

8. Zugriffsverwaltungssystem nach Anspruch 1, weiter umfassend:
eine Überwachungseinheit, die konfiguriert ist, eine elektronische Datei (30) zu überwachen, die in einem vorgegebenen Ordner in dem Server zur gemeinsamen Dateinutzung (130) gespeichert ist;
eine Dateiverarbeitungseinheit, die konfiguriert ist zum: Erlangen einer neu gespeicherten elektronischen Datei (30) von dem Server zur gemeinsamen Dateinutzung (130), wenn die Überwachungseinheit bestimmt, dass die elektronische Datei (30) neu in dem vorgegebenen Ordner in dem Server zur gemeinsamen Dateinutzung (130) gespeichert ist; und Einbetten, in der elektronischen Datei (30), von Dateiidentifikationsinformationen, die die elektronische Datei (30) identifizieren;
eine Dateispeichersteuerungseinheit, die konfiguriert ist, den Server zur gemeinsamen Dateinutzung (130) zu veranlassen, eine elektronische Datei (30) zu speichern, in der die Dateiidentifikationsinformationen eingebettet sind; und
eine Begrenzungsspezifizierungsinformationenspeichersteuereinheit, die konfiguriert ist, die Begrenzungsspezifizierungsinformationenspeichereinheit zu veranlassen, in Verknüpfung miteinander zu speichern: Informationen, die eine elektronische Datei (30) identifizieren, die in dem Server zur gemeinsamen Dateinutzung (130) gespeichert ist und in der die Dateiidentifikationsinformationen eingebettet sind; und die Dateiidentifikationsinformationen.

9. Zugriffsverwaltungssystem nach Anspruch 8, wobei
wenn eine elektronische Datei (30) neu in dem vorgegebenen Ordner in dem Server zur gemeinsamen Dateinutzung (130) gespeichert wird, die Dateiverarbeitungseinheit konfiguriert ist, die elektronische Datei (30) zu verschlüsseln, und die Dateiidentifikationsinformationen in der verschlüsselten elektronischen Datei (30) einbettet und
die Begrenzungsspezifizierungsinformationenspeichereinheit konfiguriert ist, die Begrenzungsspezifizierungsinformationen, die Dateiidentifikationsinformationen und einen Dateientschlüsselungsschlüssel, der zum Entschlüsseln der verschlüsselten elektronischen Datei (30) erforderlich ist, in Verknüpfung miteinander zu speichern.

10. Zugriffsverwaltungssystem nach Anspruch 9, weiter umfassend eine Datenumwandlungseinheit, konfiguriert zum:
Erlangen, von dem Server zur gemeinsamen Dateinutzung (130) der verschlüsselten elektronischen Datei (30), die im Server zur gemeinsamen Dateinutzung (130) gespeichert ist;
Entschlüsseln der verschlüsselten elektronischen Datei (30) unter Verwendung des Dateientschlüsselungsschlüssels;
Umwandeln der entschlüsselten elektronischen Datei (30) in Daten zur Anzeige; und
Übertragen der Daten zur Anzeige an den Server zur gemeinsamen Dateinutzung (130).

11. Dateizugriffssystem (100), umfassend:
das Zugriffsverwaltungssystem nach einem der Ansprüche 1 bis 10; und
die Benutzervorrichtung (10).

12. Dateizugriffssystem (100) nach Anspruch 11, wobei die Benutzervorrichtung (10, 20) aufweist:
eine Verschlüsselungseinheit, die konfiguriert ist, eine elektronische Datei (30) zu verschlüsseln, indem Dateiidentifikationsinformationen beinhaltet sind, die die zu verschlüsselnde elektronische Datei (30) identifizieren;
eine Dateispeichersteuerungseinheit, die konfiguriert ist, den Server zur gemeinsamen Dateinutzung (130) zu veranlassen, die verschlüsselte elektronische Datei (30) zu speichern; und
eine Speichersteuereinheit, die konfiguriert ist, das Zugriffsverwaltungssystem zu veranlassen, in Verknüpfung miteinander zu speichern: Begrenzungsspezifizierungsinformationen zum Spezifizieren einer Begrenzung, die einem Zugriff auf die verschlüsselte elektronische Datei (30), die in dem Server zur gemeinsamen Dateinutzung (130) gespeichert ist, durch den Server zur gemeinsamen Dateinutzung (130) auferlegt ist; der Dateiidentifikationsinformationen; und eines Dateientschlüsselungsschlüssels, der zum Entschlüsseln der verschlüsselten elektronischen Datei (30) erforderlich ist.

13. Computerprogramm, umfassend Anweisungen, die, wenn das Programm von einem Computer ausgeführt wird, den Computer veranlassen, die folgenden Schritte auszuführen:
Empfangen, von einer Benutzervorrichtung (10, 20), von Dateiidentifikationsinformationen, die die elektronische Datei (30) identifizieren, auf die die Benutzervorrichtung (10, 20) zugreifen soll;
Empfangen, von dem Server zur gemeinsamen Dateinutzung (130), von Begrenzungsinformationen, die eine Begrenzung angeben, die der Server zur gemeinsamen Dateinutzung (130) einem Zugriff durch die Benutzervorrichtung (10, 20) auf die elektronische Datei (30) auferlegt, die durch die empfangenen Dateiidentifikationsinformationen identifiziert werden und im Server zur gemeinsamen Dateinutzung (130) gespeichert sind;
Übertragen von Zugriffssteuerinformationen an die Benutzervorrichtung (10, 20), die zum Steuern eines Zugriffs auf die elektronische Datei (30) in der Benutzervorrichtung (10, 20) dienen und den Begrenzungsinformationen entsprechen; und
Speichern von Begrenzungsspezifizierungsinformationen zum Spezifizieren einer Begrenzung, die einem Zugriff auf die elektronische Datei (30) durch den Server zur gemeinsamen Dateinutzung (130) auferlegt ist, in einer Begrenzungsspezifizierungsinformationenspeichereinheit in Verknüpfung mit den empfangenen Dateiidentifikationsinformationen, und
Erlangen der Begrenzungsinformationen durch Abfragen des Servers zur gemeinsamen Dateinutzung unter Verwendung der Begrenzungsspezifizierungsinformationen, die in der Begrenzungsspezifizierungsinformationenspeichereinheit in Verknüpfung mit den empfangenen Dateiidentifikationsinformationen gespeichert sind.

## Revendications

1. Système de gestion d'accès configuré pour gérer l'accès à un fichier électronique (30) stocké dans un serveur de partage de fichiers (130), le système de gestion d'accès comprenant :
une unité de réception d'informations d'accès aux fichiers configurée pour recevoir, d'un dispositif utilisateur (10), des informations d'identification de fichier identifiant le fichier électronique (30) auquel doit accéder le dispositif utilisateur (10) ;
une unité de réception d'informations de restriction configurée pour recevoir, du serveur de partage de fichiers (130), des informations de restriction signalant une restriction imposée par le serveur de partage de fichiers (130) d'accès, par le dispositif utilisateur (10), au fichier électronique (30) qui est identifié par les informations d'identification de fichier reçues par l'unité de réception d'informations d'accès aux fichiers et est stocké dans le serveur de partage de fichiers (130) ;
une unité de transmission d'informations de commande d'accès configurée pour transmettre, au dispositif utilisateur (10), des informations de commande d'accès qui permettent de commander l'accès au fichier électronique (30) dans le dispositif utilisateur (10) et correspondent aux informations de restriction ; et
une unité de stockage d'informations indiquant une restriction configurée pour stocker dans celle-ci, en association les unes avec les autres, des informations indiquant une restriction pour indiquer une restriction imposée d'accès au fichier électronique imposée par le serveur de partage de fichiers (130),
et les informations d'identification de fichier, dans lequel
l'unité de réception d'informations de restriction est configurée pour recevoir les informations de restriction du serveur de partage de fichiers (130) en fonction des informations indiquant une restriction stockées dans l'unité de stockage d'informations indiquant une restriction en association avec les informations d'identification de fichier reçues par l'unité de réception d'informations d'accès aux fichiers, et le système de gestion d'accès est configuré pour obtenir les informations de restriction en interrogeant le serveur de partage de fichiers en utilisant les informations indiquant une restriction.

2. Système de gestion d'accès selon la revendication 1, dans lequel
les informations de restriction incluent des informations signalant un utilisateur (190) dont l'accès au fichier électronique (30) est autorisé ou interdit par le serveur de partage de fichiers (130),
l'unité de réception d'informations d'accès aux fichiers est configurée pour recevoir, du dispositif utilisateur (10), les informations d'identification de fichier et les informations d'identification de l'utilisateur identifiant un utilisateur du dispositif utilisateur (10), et
l'unité de transmission d'informations de commande d'accès est configurée pour transmettre les informations de commande d'accès au dispositif utilisateur (10) lorsqu'il est déterminé, en fonction des informations d'identification de l'utilisateur et des informations de restriction, si l'utilisateur du dispositif utilisateur (10) a accès au fichier électronique (30) stocké dans le serveur de partage de fichiers (130).

3. Système de gestion d'accès selon la revendication 2, dans lequel
le serveur de partage de fichiers (130) est configuré pour stocker dans celui-ci un fichier électronique (30) chiffré,
le système de gestion d'accès comprend en outre un unité de stockage d'informations de clé configurée pour stocker dans celle-ci, en association les unes avec les autres, les informations d'identification de fichier et une clé de déchiffrement de fichier nécessaire au déchiffrement du fichier électronique (30) chiffré, et
l'unité de transmission d'informations de commande d'accès est configurée pour transmettre, au dispositif utilisateur (10), la clé de déchiffrement de fichier stockée dans l'unité de stockage d'informations de clé lorsqu'il est déterminé que l'utilisateur du dispositif utilisateur (10) a accès au fichier électronique (30) stocké dans le serveur de partage de fichiers (130).

4. Système de gestion d'accès selon la revendication 2 ou 3, dans lequel
les informations de restriction incluent des informations signalant une opération sur le fichier électronique (30) qui est autorisée ou interdite par le serveur de partage de fichiers (130) à être réalisée par un utilisateur, et
l'unité de transmission d'informations de commande d'accès est configurée pour générer, en fonction des informations de restriction, des informations signalant une opération sur le fichier électronique (30) que l'utilisateur du dispositif utilisateur (10, 20) devrait être autorisé à réaliser ou interdit à réaliser et transmet les informations au dispositif utilisateur (10) lorsqu'il est déterminé que l'utilisateur du dispositif utilisateur (10) a accès au fichier électronique (30) stocké dans le serveur de partage de fichiers (130).

5. Système de gestion d'accès selon la revendication 4, dans lequel
l'opération inclut au moins l'une parmi : une opération d'affichage du fichier électronique (30) ; une opération de modification du fichier électronique (30) ; une opération d'impression du fichier électronique (30) ; une opération de sauvegarde du fichier électronique (30), une opération de copie des données inclues dans le fichier électronique (30) ; et une opération de capture d'un écran d'affichage du fichier électronique (30).

6. Système de gestion d'accès selon l'une quelconque des revendications 1 à 5, dans lequel le dispositif utilisateur (10) est configuré pour transmettre, au système de gestion d'accès, les informations d'identification de fichier lors de l'ouverture du fichier électronique (30) téléchargé à partir du serveur de partage de fichiers (130).

7. Système de gestion d'accès selon la revendication 6, dans lequel
les informations d'identification de fichier sont intégrées au fichier électronique (30), et
le dispositif utilisateur (10) est configuré pour transmettre, au système de gestion d'accès, les informations d'identification de fichier intégrées au fichier électronique (30) téléchargé à partir du serveur de partage de fichiers (130).

8. Système de gestion d'accès selon la revendication 1, comprenant en outre :
une unité de surveillance configurée pour surveiller un fichier électronique (30) stocké dans un dossier prédéfini dans le serveur de partage de fichiers (130) ;
une unité de traitement de fichier configuré pour : obtenir un fichier électronique (30) récemment stocké à partir du serveur de partage de fichiers (130) lorsque l'unité de surveillance détermine si le fichier électronique (30) a été stocké récemment dans le dossier prédéfini dans le serveur de partage de fichiers (130) ; et intégrer, dans le fichier électronique (30), des informations d'identification de fichier identifiant le fichier électronique (30) ;
une unité de commande de stockage de fichiers configurée pour amener le serveur de partage de fichiers (130) à stocker dans celui-ci un fichier électronique (30) dans lequel les informations d'identification de fichier sont intégrées ; et
une unité de commande de stockage d'informations indiquant une restriction configurée pour amener l'unité de stockage d'informations indiquant une restriction à stocker dans celle-ci, en association Is unes avec les autres : des informations identifiant un fichier électronique (30) qui sont stockées dans le serveur de partage de fichiers (130) et dans lequel les informations d'identifications de fichier sont intégrées ; et les informations d'identification de fichier.

9. Système de gestion d'accès selon la revendication 8, dans lequel
lorsqu'un fichier électronique (30) a été récemment stocké dans le dossier prédéfini dans le serveur de partage de fichiers (130), l'unité de traitement de fichier est configurée pour chiffrer le fichier électronique (30), et intègre les informations d'identification de fichier dans le fichier électronique (30) chiffré, et
l'unité de stockage d'informations indiquant une restriction est configurée pour stocker dans celle-ci, en association les unes avec les autres, les informations indiquant une restriction, les informations d'identification de fichier et une clé de déchiffrement de fichier nécessaire au déchiffrement du fichier électronique (30) chiffré.

10. Système de gestion d'accès selon la revendication 9, comprenant en outre une unité de conversion de données configurée pour :
obtenir, du serveur de partage de fichiers (130), le fichier électronique (30) chiffré stocké dans le serveur de partage de fichiers (130) ;
déchiffrer le fichier électronique (30) chiffré en utilisant la clé de déchiffrement de fichier ;
convertir le fichier électronique (30) déchiffré en données pour l'affichage ; et
transmettre les données pour l'affichage au serveur de partage de fichiers (130).

11. Système d'accès aux fichiers (100) comprenant :
le système de gestion d'accès selon l'une quelconque des revendications 1 à 10 ; et
le dispositif utilisateur (10).

12. Système d'accès aux fichiers (100) selon la revendication 11, dans lequel le dispositif utilisateur (10, 20) présente :
une unité de chiffrement configurée pour chiffrer un fichier électronique (30) en incluant des informations d'identification de fichier identifiant le fichier électronique (30) devant être chiffré ;
une unité de commande de stockage de fichiers configurée pour amener le serveur de partage de fichiers (130) à stocker dans celui-ci le fichier électronique (30) chiffré ; et
une unité de commande de stockage configurée pour amener le système de gestion d'accès à stocker dans celui-ci, en association les unes avec les autres : des informations indiquant une restriction pour indiquer une restriction imposée par le serveur de partage de fichiers (130) d'accès au fichier électronique (30) chiffré stocké dans le serveur de partage de fichiers (130) ; les informations d'identification de fichier ; et une clé de déchiffrement de fichier nécessaire au déchiffrement du fichier électronique (30) chiffré.

13. Programme informatique comprenant des instructions qui, lorsque le programme est exécuté par un ordinateur, amènent l'ordinateur à réaliser les étapes suivantes de :
réception, d'un dispositif utilisateur (10, 20), d'informations d'identification de fichier identifiant le fichier électronique (30) auquel doit accéder le dispositif utilisateur (10, 20) ;
réception, d'un serveur de partage de fichiers (130), d'informations de restriction signalant une restriction imposée par le serveur de partage de fichiers (130) d'accès, par le dispositif utilisateur (10, 20), au fichier électronique (30) qui est identifié par les informations d'identification de fichier reçues et est stocké dans le serveur de partage de fichiers (130) ;
transmission, au dispositif utilisateur (10, 20), d'informations de commande d'accès qui permettent de commander l'accès au fichier électronique (30) dans le dispositif utilisateur (10, 20) et correspondent aux informations de restriction,
stockage d'informations indiquant une restriction pour indiquer une restriction imposée d'accès au fichier électronique (30) imposée par le serveur de partage de fichiers (130) dans une unité de stockage d'informations indiquant une restriction, en association avec les informations d'indentification de fichier, et
obtention des informations de restriction en interrogeant le serveur de partage de fichiers en utilisant les informations indiquant une restriction stockées dans l'unité de stockage d'informations indiquant une restriction en association avec les informations d'identification de fichier reçues.
